# EUROPÄISCHE PATENTSCHRIFT

(11) **EP 3 615 266 B1**
(45) Veröffentlichungstag und Bekanntmachung des Hinweises auf die Patenterteilung: **29.01.2025**
(21) Anmeldenummer: 18724148.4
(22) Anmeldetag: 24.04.2018
(51) Int. Cl.: B23Q 1/00, F16J 15/00

(54) **DICHTUNGSEINHEIT**
SEALING UNIT
UNITÉ D'ÉTANCHÉITÉ

(30) Priorität: 24.04.2017 DE 102017108744
(43) Veröffentlichungstag der Anmeldung: 04.03.2020
(73) Patentinhaber: EWS Weigele GmbH & Co. KG, 73066 Uhingen (DE)
(72) Erfinder: WEIGELE, Frank, 73061 Ebersbach an der Fils (DE); WEIGELE, Matthias, 73257 Köngen (DE)
(74) Vertreter: Fürst, Siegfried
(86) Internationale Anmeldenummer: PCT/EP2018/060511
(87) Internationale Veröffentlichungsnummer: WO 2018/197521

(56) Entgegenhaltungen:
- EP-A1- 2 787 256
- WO-A1-2014/161704
- US-A1- 2014 028 016

## Beschreibung

### Technische Gebiet der Erfindung

Die Erfindung bezieht sich auf eine Dichtungseinheit mit zumindest einem radialen Durchgang, für die Weiterleitung eines Fluides von einem ortsfesten Maschinenteil in ein rotierendes Maschinenteil, insbesondere für die Verwendung an einer Werkzeugmaschine bzw. an Zubehör für Werkzeugmaschinen, wie z.B. angetriebenen Werkzeugen sowie auf ein Verfahren zum Abdichten eines radialen Durchgangs einer solchen Dichtungseinheit.

### Stand der Technik

Vorrichtungen und Anordnungen für die Weiterleitung eines Fluides von einem ortsfesten Maschinenteil in ein rotierendes Maschinenteil, welche auch als Drehverteiler bezeichnet werden, sind im Stand der Technik allgemein bekannt. Dass bei dem bestimmungsgemäßen Einsatz der Erfindung vorgesehene Fluid ist in der Regel ein Kühlmittel oder ein Schmiermittel.

Wesentliche Bauteile eines Drehverteilers, welche in spezieller Ausführung auch Drehdurchführung genannt werden, sind der Stator sowie der Rotor. Der Stator ist in der Regel mit einem ortsfesten Maschinenteil fest verbunden. Demgegenüber ist der Rotor üblicherweise am Stator relativ zu diesem rotierbar gelagert. Sowohl der Stator als auch der Rotor weisen Kanäle zur Übertragung von Fluiden auf. Eine Überleitung vom (feststehenden) Stator zum (drehbaren) Rotor erfolgt üblicherweise über sich umfänglich erstreckende Nuten (auch: Ringkanäle), die am Stator und/oder am Rotor ausgebildet sind. Neben den genannten wesentlichen Bauteilen Rotor und Stator weisen Drehverteiler im Allgemeinen Dichtungsanordnungen auf, die die erforderliche druckfeste Abdichtung zwischen dem Stator und dem Rotor gewährleisten. Ferner ist üblicherweise eine Lageranordnung vorgesehen, um die Relativbewegung zwischen dem Rotor und dem Stator zu ermöglichen.

Ein derartiger Drehverteiler ist in der US 2014/0028016 A1 gezeigt.

Die gezeigte Drehdurchführung, welche einen Abschnitt einer Fluidleitung bildet, ist insbesondere eine Drehdurchführung zur Verwendung mit einem Reifenaufblassystem für Fahrzeuge. Mit ihr soll die Weiterleitung eines unter Druck stehenden Fluids, wie z.B. Luft, erleichtert werden. Sie baut auf technische Lösungen auf, welche ausschließlich für Reifenfüllsysteme bzw. Reifenaufblassysteme an Fahrzeuge vorgesehen sind.

So umfasst diese Drehdurchführung einen ersten Gehäuseabschnitt, einen Rotor, und einen zweiten Gehäuseabschnitt, einen Stator, und zudem ein erstes ringförmiges und elastisches Dichtungselement und ein zweites Dichtungselement, welches ebenfalls ringförmig und elastisch ist. Der Stator ist mit einem ortsfesten Maschinenteil verbunden und der Rotor mit einem weiteren, rotierenden Maschinenteil.

Die Drehdurchführung besitzt wenigstens eine radial ausgerichtete Fluidleitung, welche durch den Rotor und den Stator geführt ist, wobei Körperabschnitte vom Rotor und vom Stator ein Teil der Fluidleitung bilden.

Der Stator, der Rotor und die beiden Dichtungselemente sind koaxial zu einer Systemachse liegend angeordnet.

Der Rotor hat eine ringförmige Gestalt, vorzugsweise mit einem rechteckigen Querschnitt. Von der Außenfläche des Rotors ragt, mittig platziert, ein radial ausgerichteter Steg ab, ein ringförmiger Dichtungsvorsprung.

Der Stator wird aus zwei profilierten Ringscheiben gebildet, welche aneinander anliegend und miteinander lösbar verbunden das Gehäuse des Stators bilden. Die aneinander anliegenden Ringscheiben besitzen zueinander ausgerichtete Aussparungen, sodass im zusammengebauten Zustand eine radial nach Innen gerichtete Nut gebildet ist, in welchen der ringförmige Dichtungsvorsprung des Rotors hineinragt.

Die Seitenflächen dieses Dichtungsvorsprung sind jeweils eine Rotordichtfläche.

Jeder Rotordichtfläche gegenüberliegend ist in der betreffenden Seitenfläche der Nut des Stators eines der beiden ringförmigen elastischen Dichtungselemente angeordnet und dort mit seinem Fußabschnitt fest und abdichtend positioniert.

Ausgehend vom Fußabschnitt ragt bei jedem Dichtungselement ein Lippenabschnitt unter Bildung eines V förmigen Querschnitt schräg stehend ab. Die nach außen zeigende, im montierten Zustand zur Rotordichtfläche hin gerichtete Oberfläche des Lippenabschnitts ist mit einem Dichtungsreibungskissen ausgestattet.

Bei der Montage der Einzelteile und Baugruppen der Drehdurchführung wird der Lippenabschnitt jedes Dichtungselements durch eine seitlich gerichtete Kraft, die durch die betreffende Rotordichtfläche über das Dichtungsreibungskissen auf den Lippenabschnitt ausgeübt wird, vorgespannt. Das bedeutet letztendlich, dass die Dichtfläche jedes Dichtungselements ständig unter Vorspannung an die betreffende Rotordichtfläche angepresst wird, was die bei rotierenden Dichtungen in der Regel auftretende Reibung wesentlich erhöht.

Jedes Dichtungselement, als auch deren Lippenabschnitte sind elastisch. Wenn der Druck in dem Reifenaufblassystem steigt, erhöht sich auch der Druck in der Drehdurchführung, welcher auch auf die Lippenabschnitte einwirkt, sodass das an jedem Lippenabschnitt vorgesehene Dichtungsreibungskissen stärker an die betreffende Rotordichtfläche angepresst wird, wodurch sich die Kontaktfläche zwischen den beiden aneinander anliegenden Dichtflächen flächenmäßig vergrößert, wodurch wiederum die Reibung und damit die Wärmeentwicklung steigt.

Die Dichtungsreibungskissen sind aus einem Thermoplast bzw. können aus einem Thermoplast bestehen. Reibung erzeugt bekanntlich Wärme und Wärme macht Thermoplast weich (weicher), d. h., bei steigendem Druck im Reifenaufblassystem und einhergehender Drucksteigerung in der Drehdurchführung vergrößert sich die Reibung an den Dichtflächen, und mit der einhergehenden stärkeren Wärmeentwicklung wird das Dichtungsreibungskissen weicher, wodurch die besagte Kontaktfläche (Dichtfläche) flächenmäßig größer wird, es entsteht noch mehr Reibung und zwangsläufig noch mehr Wärme; es ist also ein (negativer) Kreislauf ohne Ende.

Somit ist diese Drehdurchführung in Fluidsystemen, in welchen hohe oder sehr hohen Drücke herrschen, wie z.B. in Fluidsystemen für Werkzeugmaschinen, nicht verwendbar.

Hinzu kommt, dass die Arbeitsspindeln in Werkzeugmaschinen und insbesondere in Bearbeitungszentren für die spanende Fertigung, welche immer öfter sehr komplex sind, mit Drehzahlen laufen, welche weit über der Marke von 10.000 U/min liegen. Beim Hochgeschwindigkeitsspanen werden teils Spindeldrehzahlen von 50.000 U/min erreicht.

Eine starke Wärmeentwicklung ist in diesen Systemen sehr schädlich; jede noch so kleine Erhöhung der Wärme in Bauteilen oder Baugruppen dieser Maschinen ist zu vermeiden.

Mit der WO 2014/161704 A1 wird zudem eine Gleitringdichtungsanordnung offenbart, deren Gleitringe unterschiedlich harte Gleitflächen aufweisen, zur Vermeidung von Abrieb und Verringerung von Verschleißerscheinungen.

Die DE 10 2005 036 338 A1 offenbart eine Gleitringdichtung, insbesondere Kassetten-Gleitringdichtung. Ein ringförmiger Rotor ist gedichtet und fest mit einer drehbaren Welle verbunden, zudem sind zwei Gleitringe, zwischen denen der Rotor angeordnet ist, vorgesehen. Am Rotor und an den Gleitringen sind Gleitflächen angeordnet, so dass die Ringe zueinander gedichtet rotieren können. Der Rotor und die Gleitringe sind von einer ringförmigen zu den Ringen koaxial angeordneten Kassette abgedeckt, deren Rotation gegenüber den Ringen durch eine Verdrehsicherung verhindert ist. Die Gleitringe, d.h. deren Gleitflächen werden jeweils mittels eines Kraftspeichers in Form einer Feder in axialer Richtung gegen die betreffende der Dichtflächen des Rotors gedrückt, zwecks ausreichender Abdichtung. Die Gleitflächen der Gleitringe stehen quasi unter Vorspannung, was die Reibung und damit die Wärmeentstehung erhöht.

Der Nachteil dieser Anordnung ist ein hoher Wartungsaufwand in Folge von erhöhtem Verschleiß durch Reibung, zudem ist ein sogenannter Trockenlauf der Anordnung nicht möglich.

### Aufgabe der Erfindung

Von diesem Stand der Technik ausgehend liegt der Erfindung die Aufgabe zugrunde, eine Dichtungseinheit, mit zumindest einem radialen Durchgang, für die Weiterleitung eines Fluids von einem ortsfesten Maschinenteil zu einem rotierenden Maschinenteil einer Werkzeugmaschine bzw. eines Zubehörs für Werkzeugmaschinen, wie z.B. angetriebene Werkzeuge, hin, zu schaffen, welche in einem in Fachkreisen mit "Nasslauf" bezeichneten Arbeitsvorgang und auch in einem in Fachkreisen mit "Trockenlauf" bezeichneten Arbeitsvorgang anwendbar ist, und bei der die Reibung, insbesondere an ihren Dichtflächen, als auch die Wärmeentstehung reduziert ist und die weniger Wartungsaufwand und geringere Herstellungskosten erfordert.

### Beschreibung der Erfindung

Erfindungsgemäß wird diese Aufgabe mit einer Dichtungseinheit mit den Merkmalen des Anspruches 1 gelöst. Die nachgeordneten Ansprüche 2 bis 9 offenbaren Ausführungsvarianten der Dichtungseinheit nach der Erfindung. Gelöst wird die Aufgabe auch durch ein Verfahren zum Abdichten eines radialen Durchgangs einer solchen Dichtungseinheit mit den Merkmalen des Verfahrensanspruches 10.

Die neue Dichtungseinheit mit zumindest einem radialen Durchgang, für die Weiterleitung eines Fluides von einem ortsfesten Maschinenteil zu einem rotierenden Maschinenteil hin, geht aus von einem bekannten, mit einem Stator, wenigstens einem Rotor und wenigstens zwei Gleitringen ausgestatteten Drehverteiler. Der Stator, der Rotor und die Gleitringe sind koaxial zu einer Systemachse angeordnet. Der Stator ist für eine Verbindung mit dem ortsfesten Maschinenteil vorgesehen und in seinem Außenbereich entsprechend geformt, und nimmt in seinem Innenbereich den Rotor auf. Der Rotor ist für eine Verbindung mit bzw. auf dem rotierenden Maschinenteil vorgesehen und in seinem Innenbereich entsprechend geformt. Zudem besitzt der Rotor zwei mit Abstand zueinander angeordnete Rotordichtflächen. Die Gleitringe sind innerhalb des Stators angeordnet und mit dem Rotor in funktioneller Wirkverbindung. Jeder Gleitring besitzt wenigstens eine Gleitringdichtfläche welche an seiner Vorderseite angeordnet ist. Jeweils eine Gleitringdichtfläche und eine Rotordichtfläche bilden ein Dichtungspaar und wirken zwecks einer Abdichtung des radialen Durchganges funktionell zusammen.

Nach einem Aspekt der Erfindung sind bei dieser neuen Dichtungseinheit die Normalen auf die Dichtflächen des Rotors axial aufeinander zugerichtet und die Normalen auf die Dichtflächen der Gleitringe weisen axial voneinander weg.

Gemäß dem erfindungsgemäßen Verfahren zum Abdichten eines radialen Durchgangs einer solchen Dichtungseinheit, welche für die Weiterleitung eines Fluides von einem ortsfesten Maschinenteil zu einem rotierenden Maschinenteil hin an einer Maschine angewendet ist, und welche einen Stator, wenigstens einen Rotor und wenigstens zwei Gleitringe aufweist, wobei der Rotor und die Gleitringe funktionell zusammenwirkende Dichtflächen besitzen, besteht ein neuer Arbeitsschritt/Funktionsschritt darin, dass mit und während der Druckbeaufschlagung auf das Fluid die Gleitringe nur von dem druckbeaufschlagten Fluid, aus ihrer Ausgangsposition heraus, axial in Richtung der jeweils gegenüberliegenden Rotordichtfläche bewegt werden, sodass jeweils die Dichtfläche der Gleitringe an die betreffende Dichtfläche des Rotors derart angedrückt wird, dass die aneinandergedrückten Dichtflächen gegenüber Lösungen im Stand der Technik mit wesentlich verminderter Reibung aneinander gleiten können und zugleich eine Abdichtung erfolgt.

Ein weiterer, neuer Arbeitsschritt/Funktionsschritt sieht vor, dass nach Abschaltung der Druckbeaufschlagung des Fluides - der Fachmann nennt dies den drucklosen Zustand - die zuvor aneinandergedrückten Dichtflächen des Rotors und des jeweiligen Gleitrings relativ voneinander wegbewegt werden. Hierzu bewegen sich die Gleitringe wieder zurück in ihre axiale Ausgangsposition. Mit dem neuen Verfahren zum Abdichten eines radialen Durchgangs einer solchen Dichtungseinheit ist die Möglichkeit geschaffen worden, dass ein und dieselbe Dichtungseinheit im sogenannten "Nasslauf" und im sogenannten "Trockenlauf" verwendet werden kann. Durch die wesentliche Herabsenkung bzw. gänzlicher Vermeidung einer Andruckkraft an den Dichtflächen des Rotors und der Dichtfläche des betreffenden Gleitringes, also an jedem Dichtungspaar, ist im sogenannten Trockenlauf keine störende Reibung vorhanden. Einerseits wird der Verschleiß an der Dichtungseinheit gemindert und zum anderen wird, was bei Werkzeugmaschinen, Baugruppen von Werkzeugmaschinen und Zubehör für Werkzeugmaschinen sehr wichtig ist, einer Wärmeentwicklung (Temperaturerhöhung) an funktionswichtigen Bauteilen/Baugruppen, wie z.B. einer Werkzeugspindel, entgegen gewirkt.

Nach einem weiteren Aspekt der Erfindung bildet der Rotor mit seinen beiden außenliegenden Flanschen eine Klammer, mit welcher die beiden Gleitringe und der Stator in axialer Richtung innerhalb vorgegebener axialer Toleranzen gehalten sind. In radialer Richtung gesehen sind der Stator und die Gleitringe durch den koaxialen Aufbau bezüglich dem Rotor positioniert.

Bei einer vorteilhaften Ausführungsform der neuen Dichtungseinheit ist vorgesehen, dass im Außenumfang des Rotors eine äußere Ringnut ausgebildet ist, in welcher die Gleitringe angeordnet sind, wobei die Seitenflächen dieser Ringnut die Rotordichtflächen sind. Auch diese technische Gestaltung ist einerseits kostengünstig und andererseits eine sehr robuste Ausführung in Bezug auf Verschleiß und Wartungsaufwand.

Bei den im Stand der Technik bekannten gattungsgemäßen Dichtungseinheiten, bei welchen die Gleitringe in der Regel mit einer oder mehreren Federn vorgespannt sind, werden an den Gleitringen Kippmomente, also Drehmomente erzeugt, wodurch eine erhöhte Reibung an aneinander bewegten Flächen gegeben ist.

Dieser Nachteil ist bei der erfindungsgemäßen Dichtungseinheit nicht vorhanden.

Nach einer ergänzenden, vorteilhaften Ausführungsform ist vorgesehen, dass die äußere Ringnut im Außenumfang des Rotors und ein Bereich der inneren Fläche des Stators, insbesondere dessen Führungsflächen für die Gleitringe, gemeinsam einen Aufnahmekäfig für die Gleitringe bilden.

Nach einer weiteren vorteilhaften Ausführungsform der neuen Dichtungseinheit ist vorgesehen, dass die Rückseiten der Gleitringe einander zugewandt und mit Abstand zueinander unter Bildung eines Ringspalts angeordnet sind, wodurch die Krafteinleitung in die Gleitringe für das Andrücken von deren Dichtflächen an die Rotordichtflächen erleichtert wird.

Von Vorteil ist zudem, dass dieser Ringspalt ein Bestandteil des radialen Durchgangs für die Weiterleitung des Fluids ist.

Ein weiterer Vorteil wird erreicht, wenn in diesen Rückseiten mehrere radial ausgerichtete Ausnehmungen angeordnet sind, wobei die radialen Ausnehmungen vorzugsweise die Form einer halben Durchgangsbohrung besitzen und die jeweilige Rückseite durchbrechen. Zudem sind diese mehreren Ausnehmungen bei einem geraden Vielfachen vorteilhaft diametral zueinander angeordnet, also jeweils zwei Ausnehmungen sind diametral zueinander. Bei einem ungeraden Vielfachen sind diese mehreren Ausnehmungen vorzugsweise mit einem gleichmäßigen Abstand zwischen benachbarten Ausnehmungen angeordnet.

Wenn in einer nicht vorhersehbaren, unter gewissen Umständen gegebenen Situation die Rückseiten der Gleitringe aneinander anliegen sollten, wird der radiale Durchgang für die Weiterleitung des Fluides nicht unterbrochen, also nicht gesperrt.

Um eine solche Situation von vornherein zu vermeiden ist nach einer Ausführungsvariante vorgesehen, dass ein Distanzstift in wenigstens eine dieser in den Rückseiten der Gleitringe angeordneten radialen Ausnehmungen eingreift. Hierdurch sind die Gleitringe auch gegen Rotation im Stator gesichert. Vorzugsweise greift ein Distanzstift gleichzeitig jeweils in eine Ausnehmungen der beiden Gleitringe ein.

Nach einem weiteren Aspekt der Erfindung besteht eine vorteilhafte Ausführungsform noch darin, dass die Gleitringe jeweils mit einem elastischen Positionierring an einer inneren Führungsfläche des Stators angeordnet sind. Die Gleitringe sind sozusagen an einer Pendelstütze gelagert/gehalten. Mit einfachen technischen Mitteln wird die gewollte axiale Bewegbarkeit der Gleitringe erreicht.

Dieser elastische Positionierring hat zudem eine zweite Funktion. Wenn das durchzuleitende Fluid druckbeaufschlagt ist, wird dieser elastische Positionierring zugleich eine Dichtung. Dabei wird jeweils die Anlagefläche zwischen dem elastischen Positionierring und der betreffenden inneren Führungsfläche des Stators und die Anlagefläche zwischen dem elastischen Positionierring und dem Gleitring betragsmäßig vergrößert, sodass jede dieser Anlageflächen zu einer Sperrfläche wird. Durch das unter Druck stehende Fluid wird die hierfür notwendige Verformung des elastischen Positionierrings erreicht.

Nach einer Variante dieser Ausführungsform ist der elastische Positionierring jeweils in einer in der Mantelfläche des Gleitringes vorhandenen umlaufenden Nut angeordnet.

Nach einer weiteren Variante dieser Ausführungsform ist die umlaufende Nut für die Aufnahme des Positionierringes jeweils in dem betreffenden Abschnitt der inneren Führungsfläche des Stators angeordnet.

Befindet sich der elastische Positionierring in dieser besagten umlaufende Nut strömt das Fluid bei Druckbeaufschlagung über einen zwischen dem Gleitring und der inneren Führungsfläche vorhandenen umlaufenden Minimalspalt auch in diese umlaufende Nut und drückt dabei zugleich den elastischen Positionierring gegen eine der Nutflanken dieser umlaufenden Nut, sodass eine weitere Sperrfläche erzeugt wird.

Zudem hat dieser elastische Positionierring auch noch eine dritte Funktion, und zwar wird jeder Positionierring bei der axialen Bewegung der Gleitringe in Richtung der jeweiligen Rotordichtfläche elastisch verformt und wird zum Kraftspeicher.

Wenn die Druckbeaufschlagung des Fluides abgeschaltet wird unterstützt dieser Kraftspeicher, also der elastisch verformte Positionierring, einerseits, in einer Übergangszeit, also zu Beginn und während des Druckabfalls, die weitere Abdichtung, also eine zeitliche Verlängerung der Abdichtung in den betreffenden Bereichen der Dichtungseinheit, und zudem die Bewegung der Gleitringe in ihre Ausgangslage zurück, worauf weiter hinten im Detail noch eingegangen wird.

Bei einer weiteren vorteilhaften Ausführungsform der neuen Dichtungseinheit ist vorgesehen, dass in der Vorderseite der Gleitringe jeweils eine stirnseitige Eindrehung angeordnet ist, welche eine zurückgesetzte Ringfläche bildet, sodass die jeweilige Gleitringdichtfläche eine hervorstehende Ringfläche ist, wobei die Gleitringdichtfläche im äußeren Bereich der Vorderseite angeordnet ist.

Nach einer vorteilhaften Ausführungsform der neuen Dichtungseinheit ist zudem vorgesehen, dass die zurückgesetzte Ringfläche in der Vorderseite der Gleitringe in Verbindung mit einem Abschnitt der ihr gegenüberliegenden Rotordichtfläche und mit einem Abschnitt einer den Gleitringen zugewandten Außenumfangsfläche des Rotors einen umlaufenden Gegendruckraum bildet. Das sich in diesem Gegendruckraum während der Druckbeaufschlagung des Fluides angesammelte komprimierte Fluid unterstützt nach Abschaltung der Druckbeaufschlagung die Zurückbewegung der Gleitringe in ihre Ausgangslage. Der Querschnitt des ringförmigen Zufuhrspaltes, über welchen das Fluid während der Druckbeaufschlagung in den Gegendruckraum gedrückt wird, ist so gewählt, dass bei Abschaltung der Druckbeaufschlagung der Druckabbau in dem Gegendruckraum so langsam erfolgt, dass, wie oben erwähnt, das hier vorhandene komprimierte Fluid die Bewegung der Gleitringe zurück in ihre Ausgangsposition zunächst anschiebt und anschließend unterstützt.

Durch den erfindungsgemäßen Aufbau der Dichtungseinheit ist zum Zeitpunkt des Überganges von dem druckbeaufschlagten Zustand in den drucklosen Zustand der Druckabfall in dem Gegendruckraum und in den umlaufenden Nuten, in welchen die elastischen Positionierringe angeordnet sind, langsamer wie in dem Ringspalt und dem Ringkanal, welche zwischen den Gleitringen angeordnet sind. Ein Vorteil ist, dass das Fluid von den Rotordichtflächen bzw. Gleitringdichtflächen nach Innen abfließt.

Ein weiterer Vorteil ist, dass die abdichtende Wirkung des verformten Positionierringes mit einer zeitlichen Verzögerung nachlässt, also die im druckbeaufschlagten Zustand erzeugten Sperrflächen nicht abrupt, sondern allmählich wieder zu Anlageflächen werden.

Auch die bei bekannten technischen Lösungen nach einem Druckabfall auftretende Leckage wird mit der erfindungsgemäßen Dichtungseinheit vermieden.

Weitere Vorteile der Erfindung sind eine einfachere und kostengünstige Instandsetzung der Dichtungsteile im Verschleißfall. Es müssen in der Regel nur die, im Vergleich zu Gleitringen und Gegenringen nach dem Stand der Technik relativ einfacheren Gleitringe und/oder Ringscheiben ersetzt werden. Der Stator, sein Ringkörper und der Rotor mit seinen zwei Rotorringen müssen nicht getauscht werden.

Zudem wurde der sogenannte Wiederholteilgrad bei dieser Dichtungseinheit verbessert, da der linke und der rechter Gleitring dieselben Bauteile sind. Auch sind die linke und die rechte Ringscheibe gleiche Bauteile.

Eine Beschichtung dieser Dichtungsteile verringert zusätzlich die Reibung und verlängert die Standzeit.

Zudem ist der Einsatzbereich dieser neuen Dichtungseinheit für verschiedene Druckbereiche sowie Drehzahlbereiche möglich und zulässig, also der "von-bis-Bereich" ist gegenüber den Lösungen nach dem Stand der Technik größer, da insbesondere keine Kraftspeicher in Form von Druck- und/oder Zugfedern, deren Einsatzgebiet beschränkt ist, verwendet werden.

Die Erfindung wird nachfolgend anhand von in den Zeichnungen gezeigten, schematischen Darstellungen und anhand eines Ausführungsbeispiels näher und in weiteren Details erläutert.

### Kurze Beschreibung der Zeichnungen

Es zeigen:
- Fig. 1: ein Ausführungsbeispiel der erfindungsgemäßen Dichtungseinheit in einer perspektivischen Ansicht;
- Fig. 2: die Dichtungseinheit gemäß Fig. 1 in einer Frontalansicht;
- Fig. 3: die Dichtungseinheit gemäß Fig. 1 in einem Längsschnitt gemäß Schnitt A-A;
- Fig. 4: die in der Fig. 3 markierte Einzelheit B der Dichtungseinheit, im drucklosen Zustand;
- Fig. 5: die in der Fig. 3 markierte Einzelheit B der Dichtungseinheit, im druckbeaufschlagten Zustand;
- Fig. 6: ebenfalls die in der Fig. 3 markierte Einzelheit B der Dichtungseinheit, im druckbeaufschlagten Zustand, bezüglich weiterer Details der Erfindung;
- Fig. 6a: die in der Fig. 6 markierte Einzelheit A der Dichtungseinheit, im druckbeaufschlagten Zustand, bezüglich weiterer Details der Erfindung;
- Fig. 7: die in den Figuren 4, 5 und 6 gezeigte Einzelheit B, ohne Darstellung der Gleitringe, bezüglich weiterer Details der Erfindung;
- Fig. 8: den Rotor der erfindungsgemäßen Dichtungseinheit gemäß den Figuren 1 bis 7 bezüglich weiteren Details;
- Fig. 9: die Gleitringe der erfindungsgemäßen Dichtungseinheit gemäß den Figuren 1 bis 6a in Einzelteil-Darstellung;
- Fig. 10: den Stator der erfindungsgemäßen Dichtungseinheit gemäß den Figuren 1 bis 7 in Einzelteil-Darstellung bezüglich weiteren Details.

### Ausführliche Beschreibung der Zeichnungen und Ausführungsbeispiel

Zunächst wird vorausgeschickt, dass Begriffe wie "links", "rechts", "oben" oder "unten", vorn und hinten sich lediglich auf die Darstellung in den Figuren beziehen, aber von der tatsächlichen Anordnung in der Praxis abweichen können. Weiterhin wird darauf hingewiesen, dass die Figuren keine reinen technischen Zeichnungen sind, weshalb teilweise Schraffuren und Abbruchlinien fehlen. Zudem können die relativen Dimensionen von der Wirklichkeit abweichen. In der Beschreibung nicht erwähnte Bezugszeichen ergeben sich aus der Bezugszeichenliste. Die Bezugszeichen haben in allen Figuren die gleiche Bedeutung.

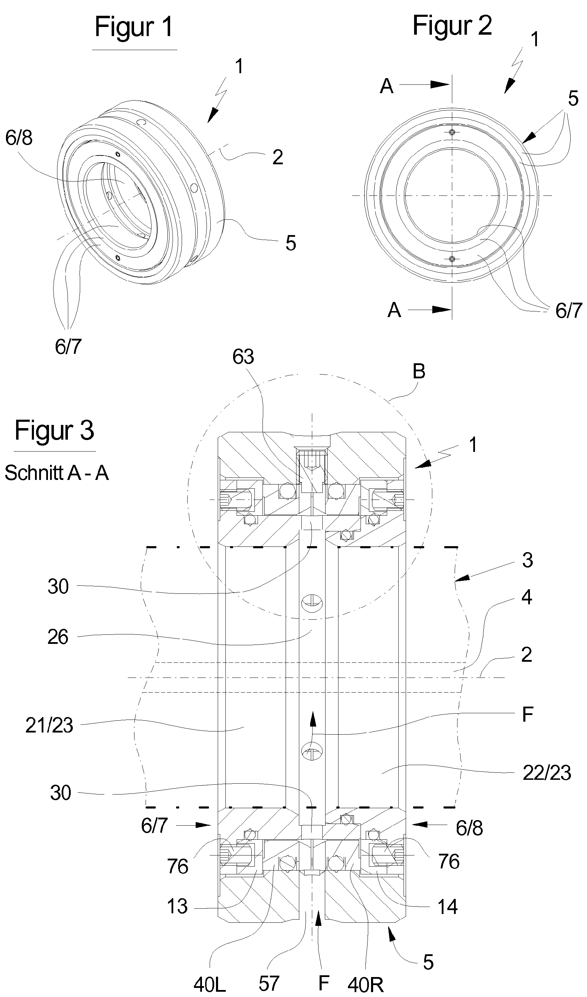

Die Fig. 1 zeigt ein mögliches Ausführungsbeispiel der erfindungsgemäßen Dichtungseinheit 1 in einer perspektivischen Ansicht. In einem Stator 5, hier ein Ringkörper, ist der Rotor 6 angeordnet, er besteht aus den beiden Bauteilen 7 und 8. Die Gleitringe, welche zwischen dem Rotor 6 und dem Stator 5 angeordnet sind, sind hier noch nicht zu sehen. Eine Frontalansicht auf die neue Dichtungseinheit 1 zeigt die Fig. 2, in welcher auch die Schnittführung für den Schnitt A-A bezüglich der Darstellung in Fig. 3 eingezeichnet ist.

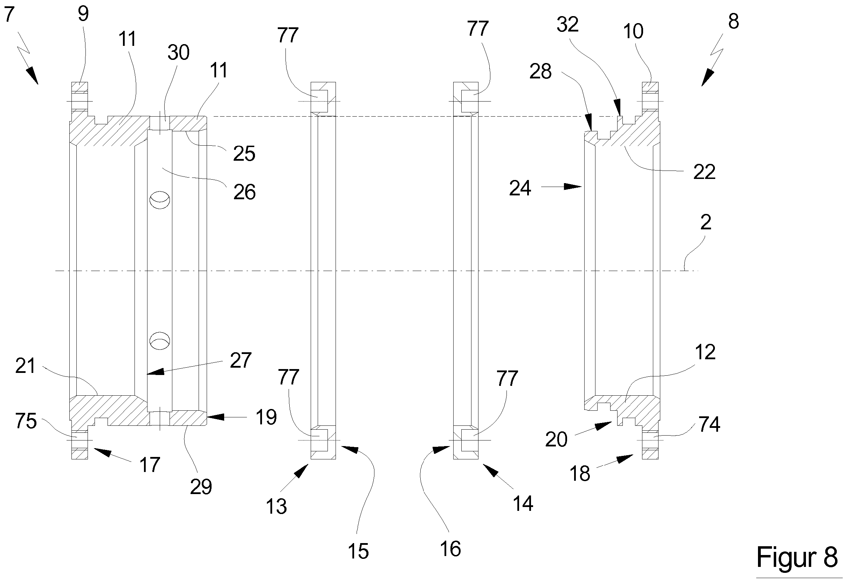

Zunächst werden anhand der Darstellungen gemäß den Figuren 8 bis 10 die Einzelteile der Dichtungseinheit 1 in ihren wesentlichen Details beschrieben.

Wie die Darstellungen in Fig. 8 zeigen, besteht bei diesem Ausführungsbeispiel der Rotor 6 im Wesentlichen aus 4 Teilen, und zwar dem ersten, dem linken Rotorring 7 und dem zweiten, dem rechten Rotorring 8 sowie jeweils einer Ringscheibe 13 und 14, welche die gleiche Form besitzen jedoch in Einbaulage spiegelbildlich angeordnet sind.

Der linke Rotorring 7 besteht aus einer Verbindungsbuchse 11 mit einem linksseitig radial aufragenden Flansch 9. In dem Flansch 9 sind wenigstens zwei durchgehende Gewindebohrungen 75 diametral angeordnet. In der Außenfläche 29 der Verbindungsbuchse 11 ist nahe dem Flansch 9 eine Ringnut vorgesehen, welcher kein Bezugszeichen zugeordnet ist. Von seiner rechten Stirnfläche 19 ausgehend ist körpereinwärts eine Buchseninnenfläche 25 vorgesehen, welche an einer Absatzringfläche 27 endet. Dieser Absatzringfläche 27 folgt eine innere Zylinderfläche 21, welche einen kleineren Durchmesser besitzt. Diese innere Zylinderfläche 21 bildet zusammen mit einer inneren Zylinderfläche 22 des rechten Rotorrings 8 die Rotorinnenfläche 23, siehe Figur 3.

Unmittelbar vor der Absatzringfläche 27 ist in die Buchseninnenfläche 25 noch eine innere Ringnut 26 eingearbeitet, deren Durchmesser nur ein wenig größer als der Durchmesser der Buchseninnenfläche 25 ist.

In der Verbindungsbuchse 11 sind zudem mehrere radial gerichtete und diametral angeordnete Durchgänge 30 vorgesehen, welche von der inneren Ringnut 26 ausgehend die Außenfläche 29 durchbrechen.

In der linken Ringscheibe 13 sind linksseitig von der Stirnfläche ausgehende und körpereinwärts gerichtete Grundbohrungen 77 angeordnet. Es sind wenigstens zwei Grundbohrungen 77 vorgesehen, die Anzahl und deren Lage (Teilung) sind auf die Anordnung der durchgehenden Gewindebohrungen 75 des Flansches 9 abgestimmt. Der Innendurchmesser dieser Ringscheibe 13 ist abgestimmt auf den Durchmesser der Außenfläche 29. Diese linke Ringscheibe 13 auf die Außenfläche 29 aufgeschoben und bis an die Anlagefläche 17 des Flansches 9 herangeführt. Vor dem Aufschieben wird in der in der Außenfläche 29 vorgesehenen Ringnut ein Dichtungsring (in der Regel ein O-Ring) eingelegt. In jede durchgehende Gewindebohrung 75 wird ein Gewindestift 76 eingedreht bis dessen Kopfbereich in der jeweiligen Grundbohrung 77 ist. Hierdurch wird die linke Ringscheibe 13 gegen Verdrehung gesichert, siehe hierzu die Figuren 3, 4, 5, 6 und 7.

Der rechte Rotorring 8 besteht aus einem Verbindungszapfen 12 mit einem rechtsseitig radial aufragenden Flansch 10. Der Verbindungszapfen 12 ist ein Hohlzapfen. In dem Flansch 10 sind wenigstens zwei durchgehende Gewindebohrungen 74 diametral angeordnet. Die Außenfläche des Verbindungszapfens 12 ist gestuft. Von seiner linken Stirnfläche 24 ausgehend ist zunächst eine im Durchmesser kleinere Außenfläche 28 vorgesehen, welche an einer Anschlagfläche 20 endet. Dieser Anschlagfläche 20 folgt ein bis zu dem Flansch 10 hinreichender Aufnahmeabsatz 32. Die linke Stirnfläche des Flansches 10 ist eine Anlagefläche 18 für die rechte Ringscheibe 14.

Diese rechte Ringscheibe 14 ist quasi spiegelbildlich zur linken Ringscheibe 13 ausgeführt. An ihrer Stirnseite, welche zum Flansch 10 hin gerichtet ist sind ebenfalls mehrere Grundbohrungen 77 vorgesehen.

Die rechte Ringscheibe 14 wird auf den Aufnahmeabsatz 32 aufgeschoben bis sie an der Anlagefläche 18 anliegt, zuvor wird in die dort auch vorgesehene Ringnut (ohne Bezugszeichen) ein Dichtungsring (in der Regel ein O-Ring) eingelegt.

In jede durchgehende Gewindebohrung 74 wird ein Gewindestift 76 eingedreht bis dessen Kopfbereich in der jeweiligen Grundbohrung 77 ist. Hierdurch wird die rechte Ringscheibe 14 gegen Verdrehung gesichert; siehe hierzu die Figuren 3, 4, 5, 6 und 7.

Die rechte freie Stirnfläche der linken Ringscheibe 13 ist die linke Rotordichtfläche 15 und die linke freie Stirnfläche der rechten Ringscheibe 14 ist die rechte Rotordichtfläche 16 des Rotors 6.

Auf die Montage der Rotorteile wird weiter hinten noch eingegangen.

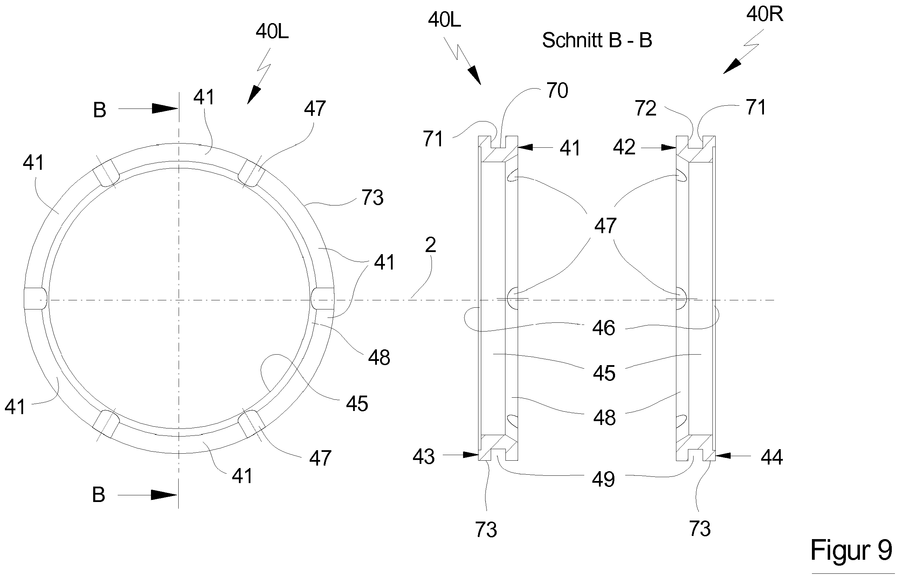

Die Gleitringe 40L und 40R sind in der Figur 9 in zwei Ansichten gezeigt. Beide Gleitringe besitzen die gleiche Form, sie sind in Einbaulage spiegelbildlich angeordnet. Die linke Darstellung in der Figur 9 zeigt eine Frontalansicht auf den Gleitring 40L. Die Darstellung in der Mitte zeigt diesen Gleitring 40L in einem Längsschnitt gemäß Schnitt B-B, die Schnittführung ist in der linken Darstellung gezeigt. Die rechte Darstellung in dieser Figur 9 zeigt den rechten Gleitring 40R, also eine spiegelbildliche Abbildung des linken Gleitrings 40L.

Die jeweils außenliegenden Stirnflächen der beiden Gleitringe 40L und 40R sind die Gleitringdichtfläche 43 bzw. 44, welche mit den Rotordichtflächen, also mit der linken Rotordichtfläche 15 bzw. der rechten Rotordichtfläche 16 funktionell zusammenwirken.

Die einander zugewandten Stirnflächen der beiden Gleitringe 40L und 40R, also jeweils die Rückseite 41 bzw. 42 jedes Gleitringes, sind eine Krafteinleitfläche. Jeder Gleitring 40L, 40R hat eine durchgehende zylinderförmige Innenfläche 45 und eine zylinderförmige Mantelfläche 73, die konzentrisch zueinander angeordnet sind, sowie eine von der Mantelfläche 73 ausgehende körpereinwärts gerichtete umlaufende Nut 49, welche einen Nutboden 70 und mit Abstand zueinander angeordnete Nutflanken 71 und 72, welche die Nutbreite definieren, besitzt.

In den Krafteinleitflächen 41, 42 also den Rückseiten der Gleitringe 40L und 40R, sind mehrere radial ausgerichtete und hier diametral angeordnete Ausnehmungen 47 eingearbeitet, welche einen im Wesentlichen halbkreisförmigen Querschnitt besitzen und diese Stirnfläche, genauer gesagt die verbliebene Kreisringfläche, in mehrere Kreisringsegmente teilt, siehe die linke Darstellung in Figur 9.

Am Übergang, also an der von der Rückseite 41 bzw. 42 und der Innenfläche 45 gebildeten Kante ist eine Schrägfläche 48 angeordnet, welche zugleich eine Kanalwand ist, worauf weiter hinten noch im Detail eingegangen wird.

In die Stirnseite jedes Gleitringes 40L und 40R, welche die Gleitringdichtfläche 43 bzw. 44 aufweist, ist eine körpereinwärts gerichtete Eindrehung 46, eine zurückgesetzte Ringfläche eingearbeitet. Diese zurückgesetzte Ringfläche 46 geht von der Innenfläche 45 aus und reicht soweit in Richtung Außendurchmesser des Gleitringes, dass die Gleitringdichtfläche 43 bzw. 44 als schmale Ringfläche hervorsteht.

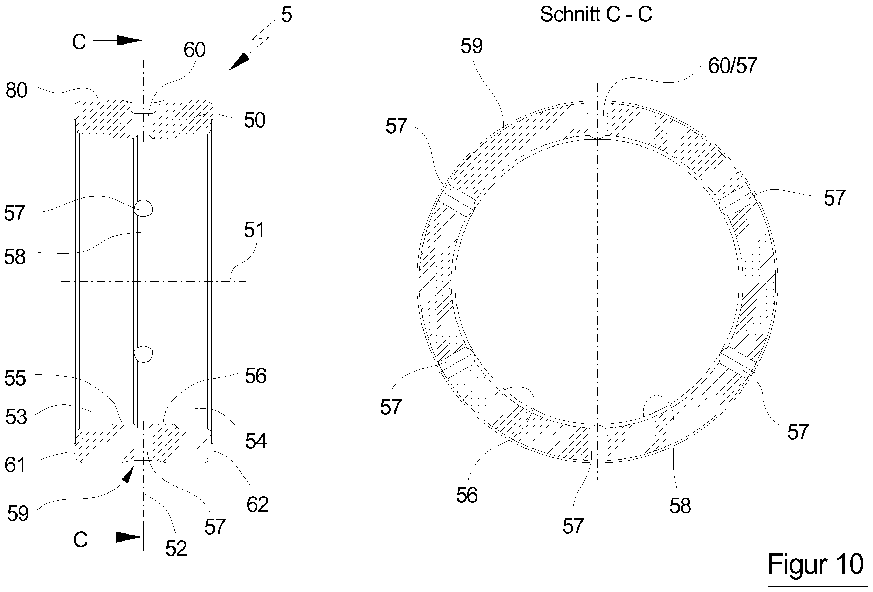

Der Stator 5 ist solo in der Fig. 10 gezeigt. Die linke Darstellung zeigt einen Längsschnitt durch den Stator 5 und die rechte Darstellung in der Figur 10 einen Querschnitt gemäß Schnitt C-C. Der Stator 5 besteht aus einem Ringkörper 50, mit einer horizontalen Körperachse 51 und einer vertikalen Symmetrieebene 52, in welche auch die Schnittführung des Schnittes C-C gelegt ist. Mittig in Bezug auf seine beiden Außenstirnflächen 61 und 62 ist in seiner Mantelfläche 80 eine Außenringnut 59 angeordnet.

Seine innere Zylinderfläche ist mehrfach gestuft. Jeweils von der Außenstirnfläche 61 bzw. 62 ausgehend ist zunächst ein Aufnahmeabschnitt 53 bzw. 54 angeordnet, auf den eine Führungsfläche 55 bzw. 56 folgt. Der Durchmesser der Führungsflächen 55 und 56 ist kleiner als der Durchmesser der Aufnahmeabschnitt 53 und 54. Zwischen den beiden Führungsflächen 55 und 56 ist eine Innenringnut 58 angeordnet. In dieser Innenringnut 58 sind mehrere radial gerichtete Durchgangsbohrungen 57 angeordnet, welche die Mantelfläche 80 durchbrechen. Die mehreren Durchgangsbohrungen 57 sind jeweils paarweise diametral angeordnet. In einer der Durchgangsbohrungen 57 ist ein Innengewinde 60.

Die Dichtungseinheit 1 ist in der Fig. 3 in einem Längsschnitt, gemäß Schnitt A-A aus Fig. 2, gezeigt, als fertig montierte Einheit und in einem drucklosen Zustand. Die Einzelteile, insbesondere die Gleitringe 40L und 40R befinden sich in der Position für den sogenannten Trockenlauf. Mit den strichpunktierten Linien ist das rotierende Maschinenteil, eine Hohlwelle 3 sinnbildlich angedeutet, auf welcher der Rotor 6 positioniert und arretiert ist. Die Hohlwelle 3 besitzt einen Innenkanal 4. In der Fig. 3 sind - der Übersichtlichkeit halber - die von der Außenfläche der Hohlwelle 3 ausgehenden und zum Innenkanal 4 hin führenden Durchgänge, mit welchen das Fluid von der inneren Ringnut 26 aus zum Innenkanal 4 geleitet wird, nicht eingezeichnet. Die Hohlwelle 3 und die Dichtungseinheit 1 sind koaxial zu der Systemachse 2 angeordnet.

Der erste Rotorring 7 und der zweite Rotorring 8 sind ineinandergesteckt und bilden den Rotor 6. Hierzu wird, siehe ergänzend in die Figuren 8 bis 10, die Außenfläche 28 des Verbindungszapfens 12 des rechten Rotorrings 8 in die Buchseninnenfläche 25 der Verbindungsbuchse 11 des linken Rotorrings 7 gesteckt und die Stirnfläche 19 der Verbindungsbuchse 11 bis an die Anschlagfläche 20 des Verbindungszapfens 12 herangeführt.

Zuvor wurden zunächst die beiden Ringscheiben 13 und 14 jeweils an der Anlagefläche 17 bzw. 18 der Flansche 9 bzw. 10 positioniert und dann der linke Gleitring 40L auf die Außenfläche 29 des linken Rotorrings 7 aufgeschoben.

Sodann wird diese Montagebaugruppe von links in den Ringkörper 50 das Stators 5 eingeführt und so positioniert, dass sich der Flansch 9 mitsamt der Ringscheibe 13 im linken Aufnahmeabschnitt 53 und sich der linke Gleitring 40 L in der linken Führungsfläche 55 befindet. Vor diesem Einschieben der Montagebaugruppe wurde zudem noch in die umlaufende Nut 49 des Gleitringes 40 L ein elastischer Positionierring 64 eingelegt, welcher in seiner Solllage an der linken Führungsfläche 55 anliegt.

Nach der Positionierung dieser Montagebaugruppe in dem Ringkörper 50 wird der rechte Gleitring 40 R mitsamt dem in seiner umlaufenden Nut 49 eingelegten elastischen Positionierring 64 von rechts, also von der rechten Außenstirnfläche 62 ausgehend, auf die Außenfläche 29 des linken Rotorrings 7 aufgeschoben, wobei der elastische Positionierring 64 an der rechten Führungsfläche 56 an liegt.

Sodann wird in die das Innengewinde 60 aufweisenden Durchgangsbohrung 57 des Ringkörpers 50 ein Distanzstift 63, ein Gewindestift mit Zapfen, eingeschraubt bis er jeweils in eine der radialen Ausnehmungen 47 beider Gleitringe 40 L und 40 R eingreift und somit die Rückseiten 41 und 42 dieser Gleitringe auf Abstand hält.

Zum Abschluss wird dann der rechte Rotorring 8, wie bereits oben erwähnt, mit der Außenfläche 28 seines Verbindungszapfens 12 in die Verbindungsbuchse 11 des linken Rotorrings 7 eingeschoben.

Der Stator 5, die Gleitringe 40L und 40R und der Rotor 6 sind dadurch so positioniert, dass die Durchgangsbohrungen 57, die Innenringnut 58, die radialen Ausnehmungen 47, die Schrägflächen 48 und die Durchgänge 30 nebst der inneren Ringnut 26 symmetrisch zu der vertikalen Symmetrieebene 52 des Stators 5 sind und somit gemeinsam den radialen Durchgang für die Weiterleitung des Fluides F bilden. In der Figur 3 ist die Flußrichtung des Fluides F durch Pfeile markiert, welchen das Bezugszeichen F zugeordnet ist.

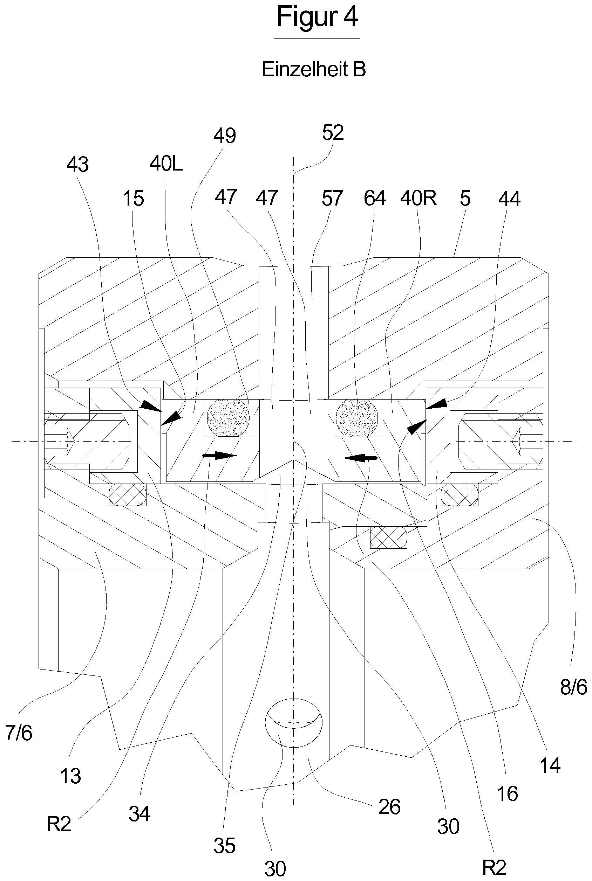

In der Figur 4 ist die in der Figur 3 markierte Einzelheit B in einem größeren Maßstab gezeigt, sodass weitere Details deutlicher sichtbar sind.

Die an den Ringscheiben 13 und 14 jeweils vorgesehene Rotordichtfläche 15 bzw. 16 liegen so, dass die Normalen auf diesen Rotordichtflächen 15 und 16 axial aufeinander zu gerichtet sind, während die an den Gleitringen 40L und 40R jeweils vorgesehene Gleitringdichtfläche 43 bzw. 44 so liegen, dass die Normalen auf diese Gleitringdichtfläche 43 und 44 axial voneinander wegweisen.

Die Verbindung zwischen dem linken Rotorring 7 und dem rechten Rotorring 8 ist mit einem üblichen Dichtungsring (ohne Bezugszeichen) abgedichtet; ebenso sind die Ringscheibe 13 und die Ringscheibe 14 gegenüber der Außenfläche 29 bzw. dem Aufnahmeabsatz 32 jeweils mit einem üblichen Dichtungsring (ohne Bezugszeichen) abgedichtet.

Die Rückseiten 41 und 42 der Gleitringe 40L und 40R sind einander zugewandt und zwischen ihnen ist ein Abstand, der Ringspalt 35. Mit den Schrägflächen 48 beider Gleitringe 40L und 40R und der Außenfläche 29 des Rotors 6 wird ein Ringkanal 34 gebildet. Dieser Ringkanal 34 ist über die mehreren Durchgänge 30 mit der inneren Ringnut 26 des Rotors 6 verbunden.

Da der elastische Positionierring 64 während des sogenannten drucklosen Zustandes, dem Trockenlauf, nur an der jeweiligen Führungsfläche 55 bzw. 56 des Ringkörpers 50 des Stators 5 und dem jeweiligen Nutboden 70 der umlaufenden Nuten 49 der Gleitringe 40L, 40R anliegt, also nicht angepresst wird, ist jeder Gleitring 40L, 40R zwischen seiner Führungsflächen 55, 56 sozusagen an einer Pendelstütze gehalten.

Der elastische Positionierring 64 sorgt jeweils dafür, dass der Gleitring 40L bzw. 40R in seiner axialen Sollposition ist.

Zwischen der Innenfläche 45 jedes Gleitrings 40L, 40R und dem betreffenden Abschnitt der Außenfläche 29 des Rotors 6 ist zudem ein durchgehender Spalt vorgesehen.

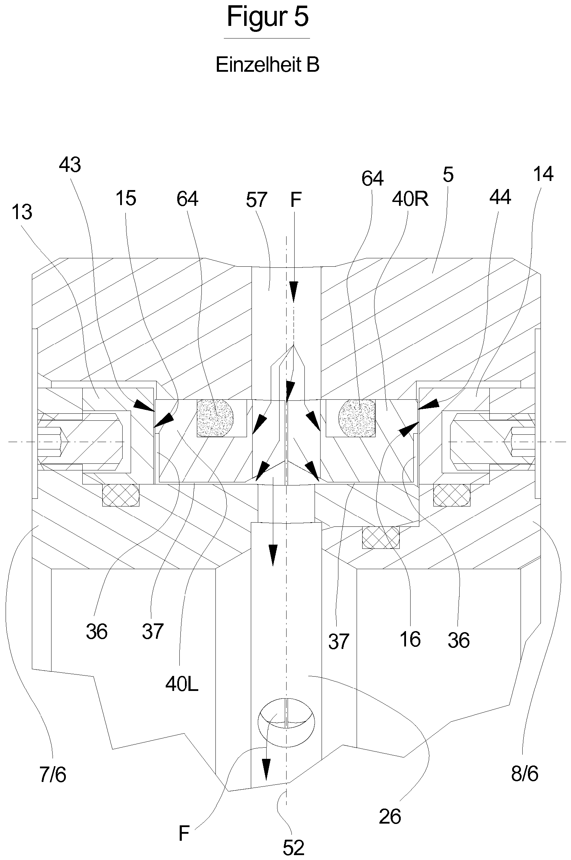

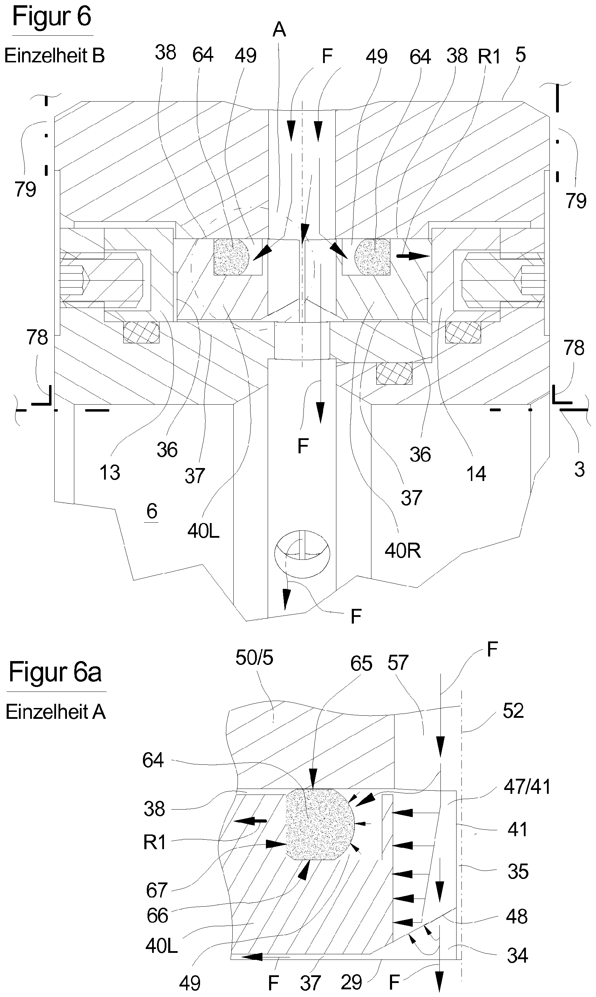

In der Figur 5 ist ebenfalls die in der Figur 3 markierte Einzelheit B in einem größeren Maßstab gezeigt. Diese Darstellung zeigt jedoch den druckbeaufschlagten Zustand. Dass in dem ortsfesten Maschinenteil 79 bereitgestellte Fluid F wird mittels Druck durch die Durchgangsbohrungen 57 in die Dichtungseinheit 1 eingeführt, zur Weiterleitung an das rotierende Maschinenteil 3 (siehe Figur 3). Das Fluid F gelangt dann in die Ausnehmungen 47 und in den Ringspalt 35, siehe ergänzend in die Figuren 6 und 6a. Die dem druckbeaufschlagten Fluid F innewohnende Kraft wird dann jeweils über die Rückseite 41 bzw. 42, die Krafteinleitfläche, auf jeden Gleitring 40L, 40R übertragen, wodurch die auf der gegenüberliegenden Stirnseite jedes Gleitringes 40L, 40R angeordnete Gleitringdichtfläche 43, 44 an die betreffende Rotordichtfläche 15, 16 so angedrückt wird, sodass zwischen jedem Paar der aneinander gleitenden Dichtflächen 15, 43; 16, 44 eine hydraulische Abdichtung erzeugt wird, sodass dort kein Fluid F abfließen kann.

Da zwischen der Innenfläche 45 jedes Gleitringes 40L, 40R und dem betreffenden Abschnitt der Außenfläche 29 des Rotors 6 ein durchgehender Spalt, ein Zufuhrspalt 37 ist, gelangt das druckbeaufschlagte Fluid F bis in den ebenfalls umlaufenden Gegendruckraum 36. Dieser Gegendruckraum 36 wird jeweils gebildet von der zurückgesetzten Ringfläche 46 am Gleitring 40L, 40R, dem freien Ringflächenabschnitt der betreffenden Rotordichtfläche und dem betreffenden Abschnitt der Außenfläche 29 des Rotors 6. Das druckbeaufschlagten Fluid F wirkt hier ebenfalls kraftmäßig auf jeden Gleitring 40L, 40R, jedoch nun in entgegengesetzter Richtung, sodass die Druckfläche gleich ist mit der gleitenden Dichtfläche und somit die Dichtflächen 15, 16 am Rotor 6 und die Dichtflächen 43, 44 an den Gleitringen 40L, 40R vor nicht notwendiger Reibung und somit vor übermäßigen Verschleiß geschützt werden.

Da zwischen der Mantelfläche 73 der Gleitringe 40L, 40R und der jeweiligen Führungsfläche 55, 56 eine Spielpassung vorgesehen ist, gelangt das druckbeaufschlagte Fluid F über diese Spielpassung, den Minimalspalt 38 auch in die umlaufende Nut 49 jedes Gleitringes 40L, 40R. Dort wirkt das druckbeaufschlagte Fluid F als Kraft auf die dort freie Mantelläche des elastischen Positionierrings 64 und drückt diesen gegen die der Gleitfläche zu gewandten Nutflanke 71, siehe Fig. 9, dieser umlaufenden Nut 49. Zugleich wird der Körper des elastischen Positionierrings 64 auch in beide radialen Richtungen gedrückt, sodass jeweils die Anlagefläche des elastischen Positionierrings 64 am Nutboden 70 und an der betreffenden Führungsfläche 55, 56 betragsmäßig vergrößert wird, sodass die Anlagefläche an der Führungsfläche 55, 56 zu einer oberen Sperrfläche 65 wird und die Anlagefläche an dem Nutboden 70 zu einer unteren Sperrfläche 66; zudem wird die Anlagefläche des elastischen Positionierrings 64 an der Nutflanke 71 zur seitlichen Sperrfläche 67. Somit ist nun der radiale Durchgang für die Weiterleitung eines Fluids F in der Dichtungseinheit 1 allseits abgedichtet.

Die jeweilige Flußrichtung des Fluids F als auch die von dem druckbeaufschlagten Fluid F weitergeleiteten Kräfte sind in den Figuren 5, 6 und 6a mit entsprechenden Pfeilen gekennzeichnet.

Die auf die Dichtflächen wirkende axiale Belastungsbewegung R1 der Gleitringe 40L, 40R ist in den Figuren 6 und 6a eingezeichnet. Die bezüglich den Dichtflächen wirkende axiale Entlastungsbewegung R2 der Gleitringe 40L, 40R ist in der Fig. 4 eingezeichnet.

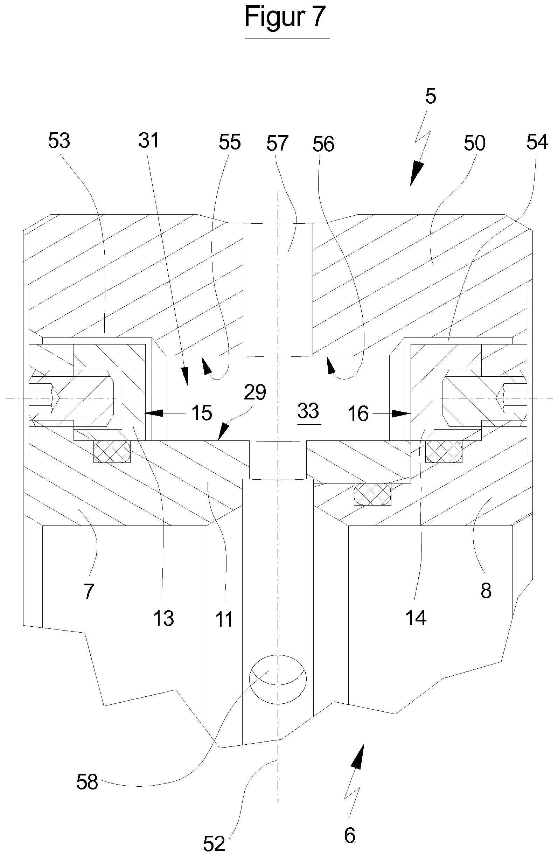

Eingangs der Beschreibung wurde bereits ausgeführt, dass der Rotor 6 mit seiner Außenfläche 29 und den beiden seitlich hierzu mit Abstand zueinander angeordneten Flanschen 9 und 10, an welchen die Ringsscheiben 13 und 14 angelegt sind, welche die jeweilige Rotordichtfläche aufweisen, eine äußere Ringnut 31 bildet, in welcher die Gleitringe 40L, 40R positioniert werden; dies wird in der in Figur 7 gezeigten Darstellung im Detail gezeigt. Dieser äußere Ringnut 31 bildet zusammen mit den Führungsflächen 55 und 56 des Ringkörpers 50 des Stators 5 den eingangs der Beschreibung ebenfalls genannten Aufnahmekäfige 33, in welchen die Gleitringe 40L, 40R gehalten und geführt werden.

Zugleich bildet der Rotor 6 mit seinen Flanschen 9 und 10 eine zusammenhaltende Klammer für die Gleitringe 40L, 40R und den Stator 5.

Ergänzend wird noch angemerkt, dass der Rotor 6 auf der Hohlwelle 3 mit bekannten und üblichen Maßnahmen befestigt wird; dies kann durch Presspassung (Strafsitz), Klebung oder mit bekannten Arretierungsteilen 78 erfolgen, letztere Befestigungsmethode ist in der Figur 6 angedeutet.

So ist bei einer weiteren, möglichen Ausführungsvariante der Elastizitätsfaktor des elastischen Positionierrings so gewählt, dass jeder Gleitring in einem Wertebereich von 0,001 bis 1,0 Millimeter, vorzugsweise in einem Wertebereich von 0,005 bis 0,05 Millimeter, nach der Abschaltung der Druckbeaufschlagung durch die durch die zeitweilige Verformung des Positionierrings in selbigem gespeicherte Kraft axial bewegt, also zurück bewegt werden kann. Nach einer weiteren, möglichen Ausführungsvariante beträgt die Tiefe der Eindrehung 46 zwischen 0,001 bis 2,0 Millimeter, vorzugsweise zwischen 0,001 und 0,2 mm.

### Bezugszeichenliste

- 1: Dichtungseinheit
- 2: Systemachse
- 3: Hohlwelle (rotierendes Maschinenteil)
- 4: Innenkanal
- 5: Stator (Ringkörper)
- 6: Rotor (hohlzylinderförmig)
- 7: erster Rotorring (linker Rotorring)
- 8: zweiter Rotorring (rechter Rotorring)
- 9: Flansch
- 10: Flansch
- 11: Verbindungsbuchse
- 12: Verbindungszapfen (Hohlzapfen)
- 13: linke Ringscheibe
- 14: rechte Ringscheibe
- 15: linke Rotordichtfläche (Gleitfläche)
- 16: rechte Rotordichtfläche (Gleitfläche)
- 17: Anlagefläche (an Pos. 9)
- 18: Anlagefläche (an Pos. 10)
- 19: Stirnfläche (von Pos. 11)
- 20: Anschlagfläche (an Pos. 10)
- 21: innere Zylinderfläche (von Pos. 7)
- 22: innere Zylinderfläche (von Pos. 8)
- 23: Rotorinnenfläche (von Pos. 6)
- 24: Stirnfläche (von Pos. 12)
- 25: Buchseninnenfläche (in Pos. 11)
- 26: innere Ringnut (in Pos. 6)
- 27: Absatzringfläche (zwischen Pos. 25 und 21)
- 28: Außenfläche (von Pos. 12)
- 29: Außenfläche (von Pos. 11)
- 30: Durchgänge (zwischen den Pos. 26 und 29)
- 31: äußere Ringnut (zwischen Pos. 13 und 14 und 11 von Pos. 6)
- 32: Aufnahmeabsatz (für Pos. 14)
- 33: Aufnahmekäfig
- 34: Ringkanal
- 35: Ringspalt
- 36: Gegendruckraum (umlaufend)
- 37: Zufuhrspalt
- 38: Minimalspalt (Spielpassung)
- 40L: linker Gleitring
- 40R: rechter Gleitring
- 41: Rückseite des linken Gleitrings (Krafteinleitflächen)
- 42: Rückseite des rechten Gleitrings (Krafteinleitflächen)
- 43: Gleitringdichtfläche des linken Gleitrings
- 44: Gleitringdichtfläche des rechten Gleitrings
- 45: Innenfläche
- 46: stirnseitige Eindrehung (zurückgesetzte Ringfläche)
- 47: radiale Ausnehmungen
- 48: Schrägfläche (Kanalwand)
- 49: umlaufende Nut
- 50: Ringkörper (Pos. 5)
- 51: Horizontale Körperachse
- 52: vertikale Symmetrieebene
- 53: linker Aufnahmeabschnitt (in Pos. 50)
- 54: rechter Aufnahmeabschnitt (in Pos. 50)
- 55: linke Führungsfläche (in Pos. 50)
- 56: rechte Führungsfläche (in Pos. 50)
- 57: Durchgangsbohrungen (in Pos. 50, radial)
- 58: Innenringnut
- 59: Außenringnut (an Pos. 50)
- 60: Innengewinde
- 61: linke Außenstirnfläche
- 62: rechte Außenstirnfläche
- 63: Distanzstift (Gewindestift mit Zapfen)
- 64: elastischer Positionierring (zugleich Dichtring)
- 65: obere Sperrfläche (an Pos. 64)
- 66: untere Sperrfläche (an Pos. 64)
- 67: seitliche Sperrfläche (an Pos. 64)
- 68 -69: - freie Bezugszeichen -
- 70: Nutboden
- 71: Nutflanke (Gleitflächen seitige)
- 72: Nutflanke (Druckflächen seitige)
- 73: Mantelfläche (von Pos. 40L und 40R)
- 74: durchgehende Gewindebohrung
- 75: durchgehende Gewindebohrung
- 76: Gewindestifte
- 77: Grundbohrungen
- 78: Arretierungsteil
- 79: ortsfestes Maschinenteil
- 80: Mantelfläche (von Pos. 50)

- F: Fluid
- R1: axiale Belastungsbewegung (von Pos. 40L und 40R)
- R2: axiale Entlastungsbewegung (von Pos. 40L und 40R)

## Patentansprüche

1. Dichtungseinheit (1), für die Weiterleitung eines Fluides (F) von einem ortsfesten Maschinenteil (79) zu einem rotierenden Maschinenteil (3) einer Werkzeugmaschine bzw. eines Zubehörs für Werkzeugmaschinen, wie z.B. angetriebene Werkzeuge, hin, welche (1) hierzu ausgestattet ist mit einem Stator (5), wenigstens einem Rotor (6) und wenigstens zwei Gleitringen (40L, 40R) sowie mit zumindest einem radialen Durchgang (57, 47, 34, 30, 26) für das Weiterleiten des Fluides (F), wobei
- der Stator (5), der Rotor (6) und die Gleitringe (40L, 40R) koaxial zu einer Systemachse (2) angeordnet sind,
- der Stator (5) für eine Verbindung mit dem ortsfesten Maschinenteil (79) vorgesehen und in seinem Außenbereich entsprechend geformt ist und in seinem Innenbereich den Rotor (6) aufnimmt,
- der Rotor (6) für eine Verbindung mit bzw. auf dem rotierenden Maschinenteil (3) vorgesehen und in seinem Innenbereich entsprechend geformt ist,
- jeder Gleitring (40L, 40R) wenigstens eine Gleitringdichtfläche (43, 44) aufweist,
wobei
- der Rotor (6) zwei mit Abstand zueinander angeordnete Rotordichtflächen (15, 16) aufweist,
- die Gleitringe (40L, 40R) innerhalb des Stators (5) angeordnet und mit dem Rotor (6) in funktioneller Wirkverbindung sind,
- jeweils eine Gleitringdichtfläche (43, 44) und eine Rotordichtfläche (15, 16) ein Dichtungspaar (15, 43; 16, 44) bilden und funktionell zusammenwirken,
- die Normalen auf die Dichtflächen (15, 16) des Rotors (6) axial aufeinander zugerichtet sind und die Normalen auf die Dichtflächen (43, 44) der Gleitringe (40L, 40R) axial voneinander wegweisen.

2. Dichtungseinheit (1) nach Anspruch 1,
**dadurch gekennzeichnet, dass**
im Außenumfang des Rotors (6) eine äußere Ringnut (31) ausgebildet ist, in welcher die Gleitringe (40L, 40R) angeordnet sind, wobei die Seitenflächen dieser Ringnut (31) die Rotordichtflächen (15, 16) sind.

3. Dichtungseinheit (1) nach Anspruch 1 oder 2,
**dadurch gekennzeichnet, dass**
die Rückseiten (41, 42) der Gleitringe (40L, 40R) einander zugewandt und mit Abstand zueinander unter Bildung eines Ringspalts (35) angeordnet sind.

4. Dichtungseinheit (1) nach Anspruch 2 oder 3,
**dadurch gekennzeichnet, dass**
die äußere Ringnut (31) im Außenumfang des Rotors (6) und ein Bereich (55, 56) der inneren Fläche des Stators (5) gemeinsam einen Aufnahmekäfig (33) für die Gleitringe (40L, 40R) bilden.

5. Dichtungseinheit (1) nach Anspruch 3 oder 4,
**dadurch gekennzeichnet, dass**
der Ringspalt (35) ein Bestandteil des radialen Durchgangs für die Weiterleitung des Fluids (F) ist.

6. Dichtungseinheit (1) nach Anspruch 1, 2, 3, 4 oder 5,
**dadurch gekennzeichnet, dass**
die Gleitringe (40L, 40R) jeweils mit einem elastischen Positionierring (64) an einer inneren Führungsfläche (55 bzw. 56) des Stators (5) axial bewegbar angeordnet sind.

7. Dichtungseinheit (1) nach Anspruch 3, 4, 5 oder 6,
**dadurch gekennzeichnet, dass**
in den Rückseiten (41, 42) der Gleitringe (40L, 40R) mehrere radial ausgerichtete Ausnehmungen (47) angeordnet sind, wobei die radialen Ausnehmungen (47) vorzugsweise die Form einer halben Durchgangsbohrung besitzen und die jeweilige Rückseite durchbrechen.

8. Dichtungseinheit (1) nach Anspruch1, 2, 3, 4, 5, 6 oder 7,
**dadurch gekennzeichnet, dass**
in der Vorderseite der Gleitringe (40L, 40R) jeweils eine stirnseitige Eindrehung (46) angeordnet ist, welche eine zurückgesetzte Ringfläche bildet, sodass die jeweilige Gleitringdichtfläche (43 bzw. 44) eine hervorstehende Ringfläche ist, wobei die Gleitringdichtfläche (43, 44) im äußeren Bereich der Vorderseite angeordnet ist.

9. Dichtungseinheit (1) nach Anspruch 8,
**dadurch gekennzeichnet, dass**
die zurückgesetzte Ringfläche (46) in der Vorderseite der Gleitringe (40L, 40R) in Verbindung mit einem Abschnitt der ihr gegenüberliegenden Rotordichtfläche (15 bzw. 16) und mit einem Abschnitt einer den Gleitringen (40L, 40R) zugewandten Außenfläche Fläche (29) des Rotors (6) einen umlaufenden Gegendruckraum (36) bildet.

10. Verfahren zum Abdichten des radialen Durchgangs einer Dichtungseinheit (1) nach einem der Ansprüche 1 bis 9,
**gekennzeichnet dadurch, dass**
mit und während der Druckbeaufschlagung auf das weiterzuleitende Fluid (F) das Fluid (F) zugleich die Gleitringe (40L, 40R) kraftmäßig beaufschlagt, sodass jeweils die Dichtfläche (43, 44) der Gleitringe (40L, 40R) an die betreffende Dichtfläche (15, 16) des Rotors (5) derart angedrückt wird, dass die aneinandergedrückten Dichtflächen (15, 43; 16, 44) mit wesentlich verminderter Reibung aneinander gleiten können und zugleich eine Abdichtung erfolgt, und das nach Wegfall der Druckbeaufschlagung auf das Fluid (F) die zuvor aneinandergedrückten Dichtflächen (15, 43; 16, 44) relativ voneinander weg bewegt werden, sodass im sogenannten Trockenlauf keine störende Reibung zwischen den Dichtflächen (15, 43; 16, 44) vorhanden ist.

## Claims

1. Sealing unit (1) for onward conduction of a fluid (F) from a stationary machine part (79) to a rotating machine part (3) on a machine tool or an accessory for a machine tools such as, for example, driven tools, which unit (1) for that purpose is equipped with a stator (5), at least one rotor (6) and at least two slide rings (40L,40R) as well as with at least one radial passage (57, 47, 34, 30, 26) for onward conduction of the fluid (F), wherein
- the stator (5), the rotor (6) and the slide rings (40L, 40R) are arranged coaxially with a system axis (2),
- the stator (5) is provided for connection with the stationary machine part (79) and is correspondingly shaped in its outer region and receives the rotor (6) in its inner region,
- the rotor (6) is provided for a connection with or on the rotating machine part (3) and is correspondingly shaped in its inner region,
- each slide ring (40L, 40R) has at least one slide ring sealing surface (43, 44),
wherein
- the rotor (6) has two rotor sealing surfaces (15, 16) arranged at a mutual spacing,
- the slide rings (40L, 40R) are arranged within the stator (5) and are in functional operative connection with the rotor (6),
- a respective slide ring sealing surface (43, 44) and rotor sealing surface (15, 16) form a sealing pair (15, 43; 16, 44) and functionally co-operate,
- the normals to the sealing surfaces (15, 16) of the rotor (6) are directed axially towards one another and the normals to the sealing surfaces (43, 44) of the slide rings (40L, 40R) face axially away from one another.

2. Sealing unit (1) according to claim 1, **characterised in that** an outer annular groove (31) in which the slide rings (40L, 40R) are arranged is formed in the outer circumference of the rotor (6), wherein the side surfaces of this annular groove (31) are the rotor sealing surfaces (15, 16).

3. Sealing unit (1) according to claim 1 or 2, **characterised in that** the rear sides (41, 42) of the slide rings (40L, 40R) face one another and are arranged at a mutual spacing with formation of an annular gap (35).

4. Sealing unit (1) according to claim 2 or 3, **characterised in that** the outer annular groove (31) in the outer circumference of the rotor (6) and a region (55, 56) of the inner surface of the stator (5) together form a receiving cage (33) for the slide rings (40L, 40R).

5. Sealing unit (1) according to claim 3 or 4, **characterised in that** the annular gap (35) is a component of the radial passage for the onward conduction of the fluid (F).

6. Sealing unit (1) according to claim 1, 2, 3, 4 or 5, **characterised in that** the slide rings (40L, 40R) are each arranged to be axially movable by a resilient positioning ring (64) at an inner guide surface (55 or 56) of the stator (5).

7. Sealing unit (1) according to claim 3, 4, 5 or 6, **characterised in that** a plurality of radially oriented recesses (47) is arranged in the rear sides (41, 42) of the slide rings (40L, 40R), wherein the radial recesses (47) preferably have the form of half a passage bore and pass through the respective rear side.

8. Sealing unit (1) according to claim 1, 2, 3, 4, 5, 6 or 7, **characterised in that** a respective end-face turned recess (46) is arranged in the front side of the slide rings (40L, 40R) and forms a recessed annular surface so that the respective slide ring sealing surface (43 or 44) is a projecting annular surface, wherein the slide ring sealing surface (43, 44) is arranged in the outer region of the front side.

9. Sealing unit (1) according to claim 8, **characterised in that** the recessed annular surface (46) in the front side of the slide rings (40L, 40R) in conjunction with a section of the rotor sealing surface (15 or 16) opposite thereto and with a section of an outer surface (29), which faces the slide rings (40L, 40R), of the rotor (6) forms an encircling counter-pressure space (36).

10. Method of sealing the radial passage of a sealing unit (1) according to any one of claims 1 to 9, **characterised in that** the fluid (F) loads the slide rings (40L, 40R) in terms of force simultaneously with and during pressure loading on the fluid (F) to be conducted onward so that the respective sealing surface (43, 44) of the slide rings (40L, 40R) is pressed against the relevant sealing surface (15, 16) of the rotor (5) in such a way that the sealing surfaces (15, 43; 16, 44) pressed against one another can slide against one another with substantially reduced friction and at the same time a sealing is effected, and that after removal of the pressure loading on the fluid (F) the sealing surfaces (15, 43; 16, 44) previously pressed against one another are relatively moved away from one another so that in a so-called dry run there is no disruptive friction between the sealing surfaces (15, 43; 16, 44).

## Revendications

1. Unité d'étanchement (1) dévolue à l'acheminement d'un fluide (F) d'une partie fixe (79) vers une partie rotative (3) d'une machine-outil, respectivement d'un accessoire destiné à des machines-outils tel que des outils entraînés, par exemple, ladite unité (1) étant équipée, à cette fin, d'un stator (5), d'au moins un rotor (6) et d'au moins deux bagues de glissement (40L, 40R), ainsi que d'au moins un passage radial (57, 47, 34, 30, 26) affecté à l'acheminement du fluide (F), sachant que
- le stator (5), le rotor (6) et les bagues de glissement (40L, 40R) sont disposés coaxialement à un axe (2) du système,
- ledit stator (5) est prévu pour être relié à la partie fixe (79) de la machine, est doté d'une configuration correspondante dans sa région extérieure, et reçoit le rotor (6) dans sa région intérieure,
- ledit rotor (6) est prévu pour être relié à la partie rotative (3) de ladite machine, voire implanté sur cette dernière, et est pourvu d'une configuration correspondante dans sa région intérieure,
- chaque bague de glissement (40L, 40R) est munie d'au moins une surface d'étanchement (43, 44),
auquel cas
- ledit rotor (6) est nanti de deux surfaces d'étanchement (15, 16) agencées à distance l'une de l'autre,
- lesdites bagues de glissement (40L, 40R) sont logées à l'intérieur du stator (5) et sont fonctionnellement en liaison interactive avec le rotor (6),
- une surface d'étanchement (43, 44) d'une bague de glissement et une surface d'étanchement (15, 16) du rotor forment, à chaque fois, un appariement d'étanchement (15, 43 ; 16, 44) et coopèrent fonctionnellement,
- les normales auxdites surfaces d'étanchement (15, 16) du rotor (6) sont dirigées axialement l'une vers l'autre, et les normales auxdites surfaces d'étanchement (43, 44) des bagues de glissement (40L, 40R) s'éloignent axialement l'une de l'autre.

2. Unité d'étanchement (1) selon la revendication 1,
**caractérisée par**
le façonnage, dans le pourtour extérieur du rotor (6), d'une rainure annulaire externe (31) dans laquelle les bagues de glissement (40L, 40R) sont logées, les faces latérales de cette rainure annulaire (31) constituant les surfaces d'étanchement (15, 16) du rotor.

3. Unité d'étanchement (1) selon la revendication 1 ou 2,
**caractérisée par le fait que**
les faces postérieures (41, 42) des bagues de glissement (40L, 40R) sont tournées l'une vers l'autre, et sont agencées à distance l'une de l'autre en formant un interstice annulaire (35).

4. Unité d'étanchement (1) selon la revendication 2 ou 3,
**caractérisée par le fait que**
la rainure annulaire externe (31) située dans le pourtour extérieur du rotor (6), et une région (55, 56) de la face intérieure du stator (5), forment conjointement une cage de réception (33) dédiée aux bagues de glissement (40L, 40R).

5. Unité d'étanchement (1) selon la revendication 3 ou 4,
**caractérisée par le fait que**
l'interstice annulaire (35) fait partie intégrante du passage radial affecté à l'acheminement du fluide (F).

6. Unité d'étanchement (1) selon la revendication 1, 2, 3, 4 ou 5,
**caractérisée par le fait que**
les bagues de glissement (40L, 40R) sont respectivement agencées avec faculté de mouvement axial, au moyen d'une bague élastique de positionnement (64), sur une surface intérieure de guidage (55, respectivement 56) du stator (5).

7. Unité d'étanchement (1) selon la revendication 3, 4, 5 ou 6,
**caractérisée par le fait que**
plusieurs évidements (47) orientés radialement sont pratiqués dans les faces postérieures (41, 42) des bagues de glissement (40L, 40R), lesquels évidements radiaux (47) revêtent préférentiellement la forme d'un demi-alésage de passage et traversent la face postérieure considérée.

8. Unité d'étanchement (1) selon la revendication 1, 2, 3, 4, 5, 6 ou 7,
**caractérisée par**
la présence, dans la face antérieure des bagues de glissement (40L, 40R), d'une dépouille frontale respective (46) formant une surface annulaire en retrait, de telle sorte que la surface d'étanchement considérée (43, respectivement 44) d'une bague de glissement constitue une surface annulaire en saillie, ladite surface d'étanchement (43, 44) de la bague de glissement étant située dans la région extérieure de ladite face antérieure.

9. Unité d'étanchement (1) selon la revendication 8,
**caractérisée par le fait que**
la surface annulaire (46) en retrait forme, dans la face antérieure des bagues de glissement (40L, 40R), une chambre périphérique de contre-pression (36) en liaison avec un tronçon de la surface d'étanchement (15, respectivement 16) du rotor qui est opposé à la surface précitée, et avec un tronçon d'une face extérieure, surface (29) dudit rotor (6) qui pointe vers lesdites bagues de glissement (40L, 40R).

10. Procédé conçu pour assurer l'étanchéité du passage radial parcourant une unité d'étanchement (1) conforme à l'une des revendications 1 à 9,
**caractérisé par le fait que**,
sous l'effet de la sollicitation à la pression du fluide (F) à acheminer, et au cours de ladite sollicitation, ledit fluide (F) sollicite concomitamment les bagues de glissement (40L, 40R), en agissant en force, de manière que la surface d'étanchement (43, 44) desdites bagues de glissement (40L, 40R) soit appliquée à chaque fois, contre la surface d'étanchement concernée (15, 16) du rotor (6), avec une pression telle que les surfaces d'étanchement (15, 43 ; 16, 44), pressées les unes contre les autres, puissent glisser les unes sur les autres avec friction notablement réduite et qu'une étanchéité soit concomitamment instaurée ; et qu'après suppression de la sollicitation à la pression agissant sur ledit fluide (F), lesdites surfaces d'étanchement (15, 43 ; 16, 44), auparavant pressées les unes contre les autres, sont mues à l'écart les unes des autres de façon telle qu'aucune friction perturbatrice ne soit présente, entre lesdites surfaces d'étanchement (15, 43 ; 16, 44), lors du fonctionnement dit « à sec ».
